# EUROPÄISCHE PATENTSCHRIFT

(11) **EP 1 618 534 B1**
(45) Veröffentlichungstag und Bekanntmachung des Hinweises auf die Patenterteilung: **08.01.2014**
(21) Anmeldenummer: 04727218.2
(22) Anmeldetag: 14.04.2004
(51) Int. Cl.: H01Q 1/32, G07C 9/00

(54) **VERFAHREN ZUM BETREIBEN EINER SENDEVORRICHTUNG SOWIE DANACH ARBEITENDE SENDEVORRICHTUNG**
METHOD FOR OPERATING A TRANSMITTING DEVICE AND WORKING TRANSMITTING DEVICE
PROCEDE POUR ACTIONNER UN DISPOSITIF EMETTEUR ET DISPOSITIF EMETTEUR FONCTIONNANT SELON LEDIT PROCEDE

(30) Priorität: 25.04.2003 DE 10318727; 11.03.2004 DE 102004011926
(43) Veröffentlichungstag der Anmeldung: 25.01.2006
(73) Patentinhaber: Conti Temic microelectronic GmbH, 90411 Nürnberg (DE)
(72) Erfinder: JOOS, Uli, 88149 Nonnenhorn (DE); HAAS, Heinrich, 88074 Meckenbeuren (DE)
(86) Internationale Anmeldenummer: PCT/DE2004/000773
(87) Internationale Veröffentlichungsnummer: WO 2004/097748

(56) Entgegenhaltungen:
- EP-A- 0 722 094
- EP-A- 1 148 191
- EP-A- 1 148 192
- US-A1- 2001 028 296

## Beschreibung

Die Erfindung bezieht sich auf ein Verfahren zum Betreiben einer Sendevorrichtung mit einer Anzahl von Langwellenantennen eines Zugangssystems eines Fahrzeugs, insbesondere eines Kraftfahrzeugs. Sie bezieht sich weiter auf eine danach arbeitende Sendevorrichtung.

Ein derartiges Zugangssystem, das häufig auch als passives Zugangssystem (passiv entry system) bezeichnet wird, ist üblicherweise Teil eines übergeordneten schlüssellosen Fernsteuerungssystems, das zusätzlich zu einer automatischen Entriegelung der Tür eines Fahrzeugs auch dessen Motoranlasssystem und/oder eine Wegfahrsperre steuert. Ein solches System umfasst eine beispielsweise in den Fahrzeugschlüssel integrierte, von einer für das Fahrzeug autorisierten Person mitgeführte Sende- oder Sende- und Empfangseinrichtung (Transponder) und eine fahrzeugbasierte Sende- und Empfangseinrichtung (Tranceiver).

Zur Feststellung einer Zugangsberechtigung zu dem Fahrzeug findet zwischen dem tragbaren Transponder und dem fahrzeugbasierten Tranceiver ein Austausch von Sicherheitscodes oder Zugangsdaten auf der Basis hochfrequenter (HF) und/oder niederfrequenter (LF) - und damit kurzwelliger bzw. langwelliger - Trägersignale statt. Die Ortsdetektion des Transponders erfolgt dabei über mehrere im oder am Fahrzeug verteilt angeordnete Langwellenantennen.

Entsprechend einem aus der DE 101 08 578 A1 bekannten passiven Fernsteuerungssystem können die Langwellenantennen von einem fahrzeugbasierten Steuersystem sequenziell aktiviert werden. Auf ein derartiges langwellenbasiertes Abfragesignal antwortet der Transponder bei dem bekannten System mit einem sicherheitscodierten HF-Signal zur Identifikation der Zugangsberechtigung. Gegebenenfalls entriegelt ein fahrzeugbasiertes Steuersystem die Fahrzeugtür, so dass diese durch manuelles Betätigen des Türgriffs geöffnet werden kann.

Durch die sequenzielle Aktivierung der Langwellenantennen kann zwar die von der Fahrzeugbatterie zu liefernde Energie zur Ansteuerung der Langwellenantennen gering gehalten werden. Allerdings werden gemäß einem aus der DE 198 35 155 A1 bekannten schlüssellosen Zugangssystem die Sendeantennen üblicherweise mittels separater Treiber einzeln angesteuert, was insbesondere bei hohen Anforderungen an eine Treiberendstufe zu einem erheblichen Schaltungsaufwand führt.

Die Druckschrift US 2001/028296 offenbart ein Verfahren zum Betreiben einer Sendevorrichtung eines Zugangssystems mit einer Anzahl von Sendeantennen, bei dem die Sendeantennen über eine Mulitplexereinrichtung einzeln aktiviert werden.

Die Druckschriften EP 1 148 192 A1 und EP 1 148 191 A1 offenbaren eine elektronische Schaltung zum Speisen einer Magnetfeld-Sendespule für ein "Freihand-System" mit einer Sendestromregelung.

Entsprechend beschreibt die Druckschrift EP 0 722 094 A1 eine Sendestromregelung in einem kontaktlosen IC-Karten-System, bei dem Signale zwischen einer Leseeinrichtung und einem Transponder ausgetauscht werden.

Der Erfindung liegt daher die Aufgabe zugrunde, ein Verfahren der eingangs genannten Art anzugeben, das eine möglichst verlustarme Ansteuerung einer Anzahl von Langwellen-Sendeantennen einer Sendevorrichtung eines Fahrzeugzugangssystems ermöglicht. Des Weiteren soll eine zur Durchführung des Verfahrens besonders geeignete Sendevorrichtung, insbesondere für die Türsteuerung eines Kraftfahrzeugs, angegeben werden.

Die Erfindung wird durch die Merkmale der unabhängigen Ansprüche gelöst. Vorteilhafte Weiterbildungen des Verfahrens sind Gegenstand der hierauf zurückbezogenen Unteransprüche.

Die mit der Erfindung erzielten Vorteile bestehen insbesondere darin, dass durch eine direkte Ansteuerung aller Langwellen-Sendeantennen gemeinsam und deren Einzelaktivierung mittels einer Multiplexereinrichtung ein zuverlässiger Sendebetrieb bei gleichzeitig besonders platz- oder raumsparender und damit effektiver Schaltungs- oder Bauteileanordnung erreicht wird. Durch die direkte Ansteuerung der Langwellen-Sendeantennen wird dabei einerseits eine besonders zuverlässige Ortsdetektion und andererseits eine besonders zuverlässige Energieübertragung in einen Transponder, insbesondere in einen intelligenten Fahrzeugschlüssel, erreicht.

Durch die Verwendung eines Leistungsverstärkers mit begrenzter Anstiegszeit und optimiertem Sättigungsverhalten wird des Weiteren eine besonders verlustarme Ansteuerung bei gleichzeitiger Beschränkung der elektromagnetischen Abstrahlung auf einen zulässigen Wert ohne zusätzliche Filtermaßnahmen am Verstärkerausgang erreicht. '

Ferner ist durch die direkte Ansteuerung der aus Sendespulen in Serienresonanz gebildeten Langwellen-Sendeantennen mittels einer Trapezförmigen Spannung der Schaltungsaufwand und damit der Kostenaufwand besonders gering, zumal mehrere Sender aus einem zentralen Steuergerät angesteuert und die Sendeantennen direkt an den Verstärkerausgang angeschlossen werden können.

Zudem wird durch eine Regelung des sinusförmigen Sendestroms mit einer Begrenzung dessen Spitzenwertes mittels einer schnellen Stromabschaltung sowie einer Synchronisation durch Pulsweitenmodulation am Steuereingang des Verstärkers dessen Ausgangsleistung auf einen besonders hohen Leistungswert stabil eingestellt. Hierdurch kann die Endstufe des Verstärkers gesättigt betrieben werden, so dass in dessen Treiber oder Treiberstuf eine nur geringe Verlustleistung anfällt.

Nachfolgend wird ein Ausführungsbeispiel der Erfindung anhand einer Zeichnung näher erläutert. Darin zeigen:
- FIG 1: schematisch in einem Blockschaltbild die Schaltung einer Sendevorrichtung mit einem einzelnen Verstärker und einer Anzahl von Sendeantennen,
- FIG 2: eine vergleichsweise detaillierte Schaltung des Blockschaltbilds gemäß FIG 1,
- FIG 3: ein Signaldiagramm zur Veranschaulichung der Funktionsweise einer Stromregelung der Sendevorrichtung, sowie
- FIG 4: ein Schaltungsprinzip des Verstärkers der Sendevorrichtung.

Einander entsprechende Teile sind in allen Figuren mit den gleichen Bezugszeichen versehen.

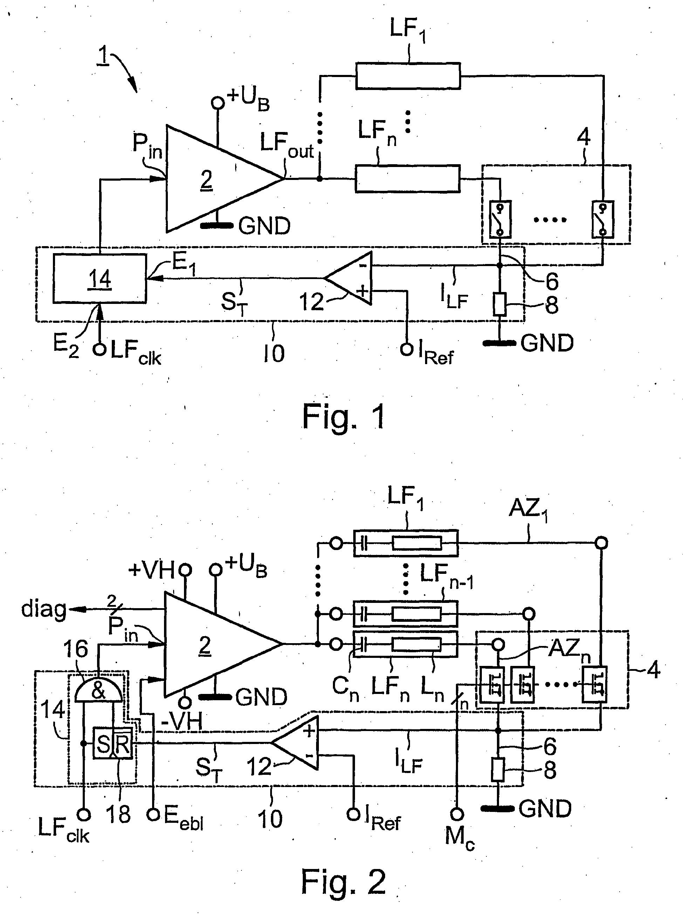

FIG 1 zeigt schematisch in einem Blockschaltbild eine Sendevorrichtung 1, die beispielsweise Teil einer Türsteuerung eines Zugangssystems eines Kraftfahrzeugs ist. Die Sendevorrichtung 1 umfasst eine Verstärkereinrichtung in Form eines zentralen Verstärkers 2, dessen Betriebsspannung U_{B} von der (nicht dargestellten) Fahrzeugbatterie geliefert wird. An den Ausgang LFₒᵤₜ des Verstärkers 2 sind eine Anzahl von nachfol-, gend als Antennen bezeichnete Langwellen-Sendeantennen LF₁...ₙ direkt und gemeinsam angeschlossen. Die Antennen LF_{1...n} werden von einer Multiplexereinrichtung oder einem Multiplexer 4 einzeln aktiviert und dabei in einer bestimmten Reihenfolge und Zeitabfolge zugeschaltet und damit nacheinander aktiviert. Dazu ist die den Antennen LF_{1...n} nachgeschaltete Multiplexereinrichtung 4 gegen Ground GND geschaltet.

In den Groundzweig 6 des Multiplexers 4 ist ein Shunt 8 zur Strommessung geschaltet, der Teil einer Stromregelung 10 ist. Die Stromregelung 10 umfasst einen Stromdetektor 12 in Form eines Überstrom-Komparators, dessen einem Eingang - hier dem (+)-Eingang - ein Referenzsignal I_{Ref} und dessen anderem Eingang - hier dem (-)-Eingang - ein über die Antennen LF_{1...n} und des Multiplexers 4 geführter Sendestrom I_{LF} zugeführt wird.

Ausgangsseitig ist der Stromdetektor 12 mit einem Eingang E₁ einer Steuerlogik 14 verbunden, an dessen zweiten Eingang E₂ ein niederfrequentes Taktsignal LF_{clk} mit einer Frequenz von zweckmäßigerweise 125 kHz geführt ist. Ausgangsseitig ist die Steuerlogik 14 mit einem Steuereingang Pᵢₙ des Verstärkers 2 verbunden.

Beim Betrieb der Sendevorrichtung 1 erzeugt der eingangsseitig mit dem niederfrequenten Triggersignal LF_{CLK} angesteuerte Verstärker 2 ausgangsseitig eine trapezförmige Spannung, die über den Verstärkerausgang LFₒᵤₜ direkt zur gemeinsamen Ansteuerung der Antennen LF_{1...n} herangezogen wird. Dabei werden die Antennen LF_{1...n} mittels des Multiplexers 4 in einer vorgebbaren Zeitabfolge nacheinander dem Verstärker 2 zugeschaltet. Dadurch wird eine besonders verlustarme Ansteuerung erzielt.

Der über die jeweils aktivierte Antenne LFₙ geführte Sendestrom I_{LF} wird an des Multiplexers 4 groundseitig mittels des Shunts 8 erfasst und dem (-)-Eingang des nachfolgend als Überstrom-Komparator bezeichneten Stromdetektors 12 zugeführt. Der Überstrom-Komparator 12 vergleicht den Sendestrom I_{LF} mit dem Referenzwert I_{Ref}. Bei Überschreiten des Referenzwertes I_{Ref} erfolgt mittels der Stromregelung 10 eine Strombegrenzung des Sendestroms I_{LF} auf den vorgebbaren Referenzwert I_{Ref}, der den Sollwert der Stromregelung'10 darstellt. Hierzu erzeugt der Überstrom-Komparator 12 ausgangsseitig ein Steuer- oder Triggersignal S_{T}, das über die Steuerlogik 14 dem Eingang Pᵢₙ des Verstärkers 2 zur Steuerung der Ausgangsleistung dessen Endstufe zugeführt wird. Dadurch wird der Istwert des Sendestroms I_{LF} bei entsprechender Güte der als Sendekreis wirksamen Sendevorrichtung 1 mit guter Näherung dem Sollwert I_{Ref} angepasst.

Wie aus der vergleichsweise detaillierten Schaltung nach FIG 2 ersichtlich ist, ist jede Langwellen-Sendeantenne LFₙ als Sendespule Lₙ ausgeführt, die mittels eines mit dieser in Reihe geschalteten Kondensators Cₙ auf Serienresonanz abgestimmt ist. Der den vom Verstärker 2 mittels einer Rechteckspannung direkt angesteuerten Antennen LFₙ nachgeschaltete Multiplexer 4 ist zweckmäßigerweise in MOSFET-Technologie ausgeführt.

Dazu umfasst der Multiplexer 4 in jedem Antennenzweig AZ₁ bis AZₙ einen Leistungstransistor (MOSFET), der gateseitig mittels eines entsprechenden Steuersignals M_{c} zur Aktivierung der jeweiligen Antenne LFₙ angesteuert wird. Demzufolge führt lediglich der jeweils angesteuerte Leistungstransistor des Multiplexers 4 den (gesamten) Sendestrom I_{LF} infolge der Ansteuerung der in dem entsprechenden Antennenzweig AZₙ angeordneten Antenne LFₙ mittels der vom Verstärker 2 erzeugten Rechteckspannung. Die Ausführung des Multiplexers 4 in SMART-MOSFET-Technologie führt vorteilhafterweise zu einer Resistenz der Anordnung gegen Kurzschlüsse der Antennenleitung, bei konventionellen MOSFETs können besonder schnelle Ansteuerungen, bspw. für eine schnelle Phasenmodulation erreicht werden.

Grundsätzlich können auch mehrere Antennen gleichzeitig betrieben werden, wobei dann nur der Summenstrom geregelt würde.

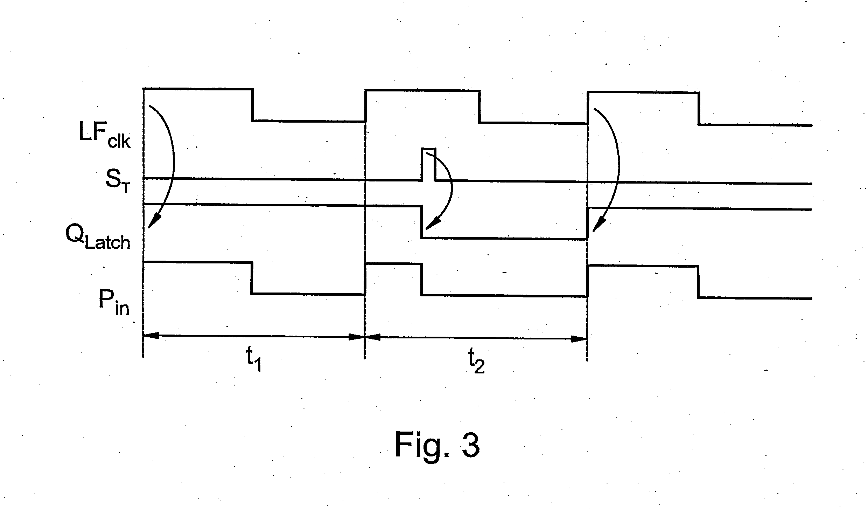

Die Steuerlogik 14 ist gemäß FIG 2 aus einem logischen UND-Glied oder -Gatter 16 und einem nachfolgend als PWM-latch bezeichneten Schaltwerk 18 aufgebaut. Dieses ist zweckmäßigerweise als flankengesteuertes D-Flippflopp (latch-Flipflop) ausgeführt, dass gemäß dem Signaldiagramm in FIG 3 auf die positive Flanke des Taktsignals LF_{clk} triggert. Dieses PWMlatch dient somit zur Synchronisation des Steuer- oder Regelsignals S_{T} mit dem Takt LF_{clk} und zur Pulsweitenmodulation (PWM) des Eingangssignals Pᵢₙ des Verstärkers 2. Dadurch erfolgt die Regelung des sinusförmigen Sendestroms I_{LF} - und damit die Regelung der Sendeleistung - durch eine Spitzenwertbegrenzung des Sendestroms I_{LF} mittels einer schnellen Stromabschaltung und einer Pulsweitenmodulations-Synchronisation.

Dazu wird das von dem Überstrom-Komparator 12 ausgangsseitig gelieferte Steuer- bzw. Regelsignal S_{T}, das durch einen Vergleich des im Masse- oder Ground-Zweig 6 des Multiplexers 4 gemessenen Sendestroms I_{LF} mit dem Soll- oder Referenzwert I_{Ref} gebildet wird, zur Ansteuerung des PWM-latches 18 herangezogen.

Wie in FIG 3 veranschaulicht, triggert dabei der Überstrom-Komparator 12 nicht und das PWM-latch 18 bleibt über den mit t₁ bezeichneten Zeitraum gesetzt (Q_{Latch} = high), solange der den Maximalwert des Sendestroms I_{LF} vorgebende Referenzwert R_{Ref} nicht überschritten wird. Damit liegt der Eingangstakt LF_{clk} (50% duty cycle) am Eingang Pᵢₙ des Verstärkers 2 an und dessen Endstufe steuert die volle Ausgangsleistung.

Überschritten dagegen der Sendestroms I_{LF} den durch den Referenzwert I_{Ref} vorgegebenen Maximal- oder Spitzenwert, so schaltet der Überstrom-Kompensator 12 und das dadurch erzeugte Regelsignal S_{T} setzt - im veranschaulichten Zeitraum t₂-das PWM-latch 18 zurück (Q_{Latch} = low). Infolge der Verknüpfung mit dem als Eingangstakt dienenden Taktsignal LF_{clk} mittels des UND-Gatters 16 wird die Pulsweite am Eingang Pᵢₙ des Verstärkers 2 derart moduliert', dass der Maximal- bzw. Spitzenwert des Sendestroms I_{LF} zumindest annähernd dem Referenzoder Sollwert I_{Ref} entspricht. Durch diesen Kurzschlussschutz kann die Sendevorrichtung 1 nicht nur in einem Türsteuersystem, sondern vielmehr auch in einem Zentralsteuerungssystem eingesetzt werden, das zusätzlich zu dem Zugangssystem auch eine Motoranlasssteuerung und/oder eine Wegfahrsperre des Fahrzeugs umfasst.

Der Verstärker 2 ist über einen ENABLE-Eingang E_{ebl} deaktivierbar, so dass der Stromverbrauch im Ruhezustand der Sendevorrichtung 1 vernachlässigbar gering ist.

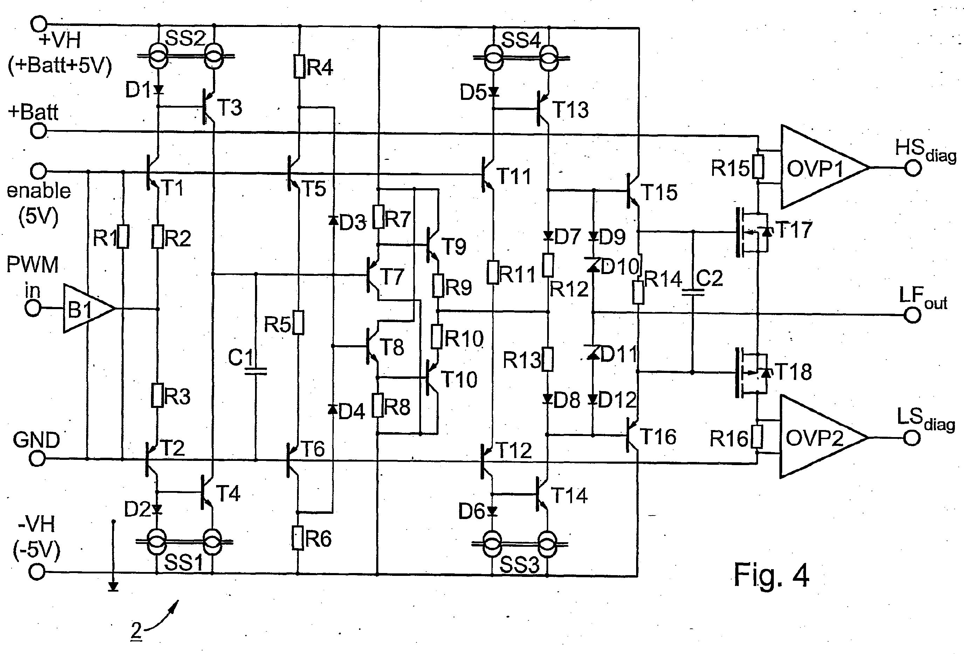

Gemäß der Darstellung in FIG 4 ist der Verstärker 2 als Sourcefolger (source follower) und damit als Leistungsverstärker mit MOS-Feldeffekttransistoren (MOSFET's) in Drainschaltung ausgeführt. Durch diese Ausführung des Verstärkers 2 und damit der gemeinsamen Treiberendstufe für alle Sendeantennen LF_{1...n} wird die Anstiegszeit der rechteck- oder trapezförmigen Ausgangsspannung am Ausgang LFₒᵤₜ des Verstärkers 2 bzw. dessen Endstufe begrenzt. Dadurch wird die elektromagnetische Abstrahlung und damit die elektromagnetische Verträglichkeit (EMV) besonders niedrig gehalten. Eine weitere Begrenzung der elektromagnetischen Abstrahlung oder EMV wird zweckmäßigerweise durch eine geeignete Kantenformung (edge shaping) der vorzugsweise trapez- oder rechteckförmigen Ausgangsspannung (LFₒᵤₜ) erreicht.

Dazu wird das von der Steuerlogik 14 der Regeleinrichtung 10 an den Eingang Pᵢₙ des Leistungsverstärkers 2 gelieferte Eingangssignal PWMᵢₙ über einen Buffar B1 und zwei durch den Widerstand R2 und den Transistor T1 sowie den Widerstand R3 und den Transistor T2 gebildeten Basisschaltungen in Referenzströme umgesetzt. Diese werden mit Stromspiegeln SS1,SS2 jeweils am höchsten bzw. tiefsten Potential (+VH = U_{B} + 5V), (-VH = -5V) gespiegelt. Die mit den jeweiligen Spannungsversorgungen +VH und -VH des Verstärkers 2 verbundenen Stromspiegel SS1 und SS2 sind stromgesteuerte Stromquellen, die den eingangsseitig eingeprägten Strom in den Kondensator C1 transferieren.

Die (gespiegelten) Referenzströme laden über die durch die Diode D1 und den Transistor T3 bzw. die Diode D2 und den Transistor T4 gebildeten Kaskodenstufen den Kondensator C1 auf, wobei das Potential am Kondensator C1 zwischen annähernd den Potentialen +VH und -VH wechselt. Dabei wird die Anstiegsgeschwindigkeit der Ladespannung am Kondensator C1 mit den Widerständen R2,R3 und mit dem Fassungsvermögen des Kondensators C1 eingestellt. Mit einem aus den Transistoren T5, T6 sowie den Dioden D3, D4 und den Widerständen R4,R5,R6 gebildeten Netzwerk kann die Spannungsrampe am Kondensator C1 zusätzlich im Bereich der Versorgungsspannungen +VH und -VH verlangsamt werden (edge shaping).

Durch die dargestellte Zusammenschaltung der Transistoren T7 bis T10 mit den Widerständen R7 bis R10 ist ein Stromverstärker gebildet, der die Spannung am Kondensator C1 auskoppelt und einen Endstufentreiber T15,T16 ansteuert. Hierzu bilden die Transistoren T11 und T12 sowie der Widerstand R11 eine schaltbare Stromquelle, deren Ausgangsstrom mit den beiden Stromspiegeln SS3und SS4 am höchsten bzw. tiefsten Potential +VH bzw. -VH gespiegelt und über die durch die Diode D5 und den Transistor T13 bzw. die Diode D6 und den Transistor T14 gebildete Kaskodenstufe ausgekoppelt wird. Die Stromspiegel mit Kaskode (SS1,D2,T4; SS2,D1,T3; SS3,D6,T14; SS4,D5,T13) bieten den Vorteil hoher Ausgangswiderstände und großer Verstärkungen in den jeweiligen Treiberstufen T7 bis T10 und T15,T16 der Verstärkereinrichtung 2.

Der ausgekoppelte symmetrische Strom fließt durch ein durch die Dioden D7,D8 sowie die Widerstände R12,R13 gebildetes Netzwerk und erzeugt damit eine Offset-Spannung zur Ansteuerung der Steuereingänge der Endstufe des Verstärkers 2. Die Endstufe ist durch MOS-Feldeffekttransistoren T17 und T18 in Source-Folgerkonfiguration gebildet, so dass die Offset-Spannung deren Gates ansteuert. Durch die konstante Bestromung dieses Netzwerkes D7,R12;D8,R13 bleibt der GatespannungsOffset über den gesamten Bereich der Ansteuerung konstant, wobei lediglich die Mittenspannung an den Widerständen R12 und R13 vom Stromverstärker T7 bis T10, R7 bis R10 gesteuert werden muss.

Werden die Widerstände R12 und R13 durch ein Netzwerk mit temperaturabhängigen Widerständen ersetzt, insbesondere durch NTC-Widerstände mit negativem Temperaturkoeffizient, kann der Offset derart beeinflusst werden, dass der Querstrom in der durch die MOSFET's T17 und T18 gebildeten Ausgangs- oder Endstufe über einen großen Temperaturbereich nahezu konstant bleibt. Alternativ kann diese Eigenschaft auch dadurch erreicht werden, dass der jeweilige Referenzstrom temperaturabhängig gesteuert wird. Hierzu kann entweder der Widerstand R11 durch einen temperaturabhängigen Widerstand ersetzt oder die Basisspannung am Transistor T11 von einer externen Kontrolleinrichtung moduliert werden.

Die Offset-Spannung steuert über den durch die Transistoren T15 und T16 gebildeten Emitterfolger direkt das jeweilige Gate der Endstufentransistoren T17 und T18. Über ein durch den Widerstand R14 und den Kondensator C2 gebildetes Netzwerk wird dabei sichergestellt, dass die Gates der Ausgangstransistoren T17 und T18 in beiden Richtungen dynamisch bewegt werden können. Anstelle dieses Netzwerkes R14,C2 können alternativ auch komplementäre Folger zur Ansteuerung der Endstufentransistoren T17,T18 eingesetzt werden. Mit einem durch die Dioden D9 bis D12 gebildeten Clamping-Netzwerk wird sichergestellt, dass im Falle eines Kurzschlusses am Verstärkerausgang LFₒᵤₜ die maximal zulässige Gate-Source-Spannung der Ausgangstransistoren T17,T18 nicht überschritten wird und diese damit nicht zerstört werden.

Über mit den Widerständen R15 und R16 beschaltete Operationsverstärker OPV1 bzw. OPV2 werden die Ströme in den Ausgangspfaden der Endstufentransistoren T17 bzw. T18 gemessen und zu Diagnosezwecken überwacht. Dabei kann durch eine geeignete Verknüpfung der dabei erfassten Stromwerte mit dem Sendestrom I_{LF} die durch die beiden Ausgangstransistoren T17 und T18 gebildete Endstufe vor einer thermischen Zerstörung im Falle eines Kurzschlusses oder einer Überlast am Ausgang LFₒᵤₜ und vor einem übermäßigen Querstrom in der Endstufe T17,T18 geschützt werden.

Der zur Deaktivierung des Leistungsverstärkers 2 dienende 5V-ENABLE-Eingang schaltet die Stromquellen der den Transistor T1 umfassenden Basisschaltung und des den Transistor T5 aufweisenden Netzwerkes sowie der den Transistor T1 aufweisenden schaltbaren Stromquelle ab. Im deaktivierten Zustand des Leistungsverstärkers 2 (ENABLE = low) werden diese Stromquellen deaktiviert und damit die Endstufentransistoren T17,T18 hochohmig geschaltet.

Durch die Strommessung in den Ausgangs- oder Endstufentransistoren T17 und T18 generierte Diagnosesignale HS_{diag} bzw. LS_{diag} werden einer (nicht dargestellten) Kontrolleinrichtung zugeführt, die den Leistungsverstärker 2 bei Kurzschluss oder Überlast am Ausgang LFₒᵤₜ und/oder gegen erhöhten Querstrom schützt.

Durch die Verwendung eines derartigen Leistungsverstärkers 2 mit begrenzter Anstiegszeit und besonders günstigem Sättigungsverhalten wird die elektromagnetische Abstrahlung ohne zusätzliche Filtermaßnahmen am Ausgang LFₒᵤₜ auf zuverlässige Werte beschränkt. Dabei kann durch symmetrische Ausführung der Schaltflanken die Anstiegsgeschwindigkeit der rechteckoder trapezförmigen Ausgangsspannung des Leistungsverstärkers 2 unter Vermeidung einer Beeinträchtigung der Eigenschaften der Sendestromregelung 10 weitgehend reduziert werden. Mit dieser aktiven Beeinflussung der Schaltflanken wird die elektromagnetische Abstrahlung des Sendeverstärkers 1 und damit der Sendevorrichtung 1 minimiert.

Insgesamt sind durch die Verwendung lediglich eines einzelnen Leistungsverstärkers 2 zur gemeinsamen Ansteuerung der mehreren Langwellen-Sendeantennen LF_{1...n} die Verstärkereigenschaften unter Vermeidung einer ineffektiven Erhöhung des Gesamtaufwandes besonders günstig. Insbesondere kann durch die aktive Beeinflussung der Schaltflanken, d.h. der Anstiegszeitbegrenzung und des edge-shaping der rechteck- bzw. trapezförmigen Ausgangsspannung des Leistungsverstärkers 2 die Sendevorrichtung 1 ohne zusätzlichen Filteraufwand in einem Kraftfahrzeug betrieben werden. Dabei wird die elektromagnetische Abstrahlung besonders gering gehalten.

Gegenüber einer sinusförmigen Ansteuerung einer Sendeeinrichtung im Langwellenbereich, deren Sendespule in Parallel- oder Serienresonanz betrieben wird, ist das beschriebene Ansteuerverfahren mittels recheck- oder trapezförmiger Ausgangsspannung hinsichtlich des dadurch erzielten geringen Schaltungsaufwandes und der geringen Verlustleistung in der Leistungsendstufe T17,T18 des Leistungsverstärkers 2 besonders vorteilhaft.

Auch sind eine aufwändige Regelung der Sendeleistung und der Einsatz jeweils einer Leistungsendstufe für jede Sendestufe oder jeden Sendezweig nicht erforderlich. Grund hierfür ist, dass die Endstufe T17,T18 des Leistungsverstärkers 2 gesättigt betrieben wird und deshalb im Endstufentreiber T15,T16 nur wenig Verlustleistung anfällt. Zudem kann der Sendestrom I_{LF} mittels Pulsweitenmodulation geregelt werden, was den Schaltungsaufwand weiter reduziert. Dadurch, dass die Antennen LF_{1...n} direkt an den Ausgang LF_{OUT} des Leistungsverstärkers 2 angeschlossen werden, können mehrere Sender aus einem zentralen Steuergerät angesteuert werden. Hierbei wird der Ansteueraufwand insbesondere auch durch die Verwendung eines Leistungsmultiplexers 4 reduziert.

### Bezugszeichenliste

- 1: Sendevorrichtung
- 2: Verstärker
- 4: Multiplexer
- 6: Groundzweig
- 8: Shunt
- 10: Stromregelung
- 12: Stromdetektor/Komparator
- 14: Steuerlogik
- 16: UND-Gatter
- 18: Schaltwerk/PWM-latch

- AZₙ: Antennenzweig
- B: Buffer
- C: Kondensator
- D: Diode
- Eₙ: Eingang
- E_{eb1}: ENABLE-Eingang
- HS_{diag}: Diagnosesignal
- LFₙ: Sendeantenne
- LS_{diag}: Diagnosesignal
- I_{LF}: Sendestrom/Istwert
- I_{Ref}: Referenzstrom/Sollwert
- Lₙ: Sendespule
- LFₙ: Sendeantenne
- LFₒᵤₜ: Ausgang
- LF_{clk}: Taktsignal
- M_{c}: Steuersignal
- Pᵢₙ: Steuereingang
- R: Widerstand
- S_{T}: Triggersignal
- SS: Stromspiegel
- T: Transistor/MOSFET
- U_{B}: Betriebsspannung
- VH: Versorgungsspannung/Potential

## Patentansprüche

1. Verfahren zum Betreiben einer Sendevorrichtung (1) eines Zugangssystems mit einer Anzahl von Langwellenantennen (LF_{1...n}), bei dem die Langwellenantennen (LF_{1...n}) gemeinsam mittels eines zentralen Leistungsverstärkers (2) angesteuert und über eine Multiplexereinrichtung (4) einzeln aktiviert werden,
**dadurch gekennzeichnet, daß** der Sendestrom (I_{LF}) geregelt wird, wobei der Istwert des Sendestroms (I_{LF}) erfasst und bei Überschreiten eines Sollwertes (I_{Ref}) durch Pulsweitenmodulation des Eingangssignals (Pᵢₙ) der Verstärkereinrichtung (2) der Sendestrom (I_{LF}) dem Sollwert (I_{Ref}) angenähert wird.

2. Verfahren nach Anspruch 1, bei dem mittels des Leistungsverstärkers (2) eine rechteck- oder trapezförmige Ausgangsspannung (LFₒᵤₜ) zur Ansteuerung der Langwellenantennen (LF_{1...n}) erzeugt wird.

3. Sendevorrichtung (1) für ein Zugangssystem, insbesondere eines Fahrzeugs,
- mit einer Anzahl von Langwellenantennen (LF_{1...n})
- mit einer Multiplexereinrichtung (4) zur Aktivierung jeweils einer einzelnen Langwellenantenne (LFₙ) und
- mit einer gemeinsamen Verstärkereinrichtung (2), an dessen Ausgang (LFₒᵤₜ) die Langwellenantennen (LF_{1...n}) gemeinsam angeschlossen sind,
**dadurch gekennzeichnet, daß**
- eine Steuereinheit (10) zur Regelung des Sendestroms (I_{LF}) vorgesehen ist,
wobei ferner eine Vorrichtung (8) zur Erfassung des Istwerts des Sendestroms (I_{LF}) und eine Steuereinheit (10,12,14) zur Pulsweitenmodulation des Eingangssignals (Pᵢₙ) der Verstärkereinrichtung (2) vorgesehen ist, und wobei die Steuereinheit bei Überschreiten eines Sollwertes (I_{Ref}) den Sendestrom (I_{LF}) dem Sollwert (I_{Ref}) annähert.

4. Sendevorrichtung nach Anspruch 3 , mit einer der Verstärkereinrichtung (2) eingangsseitig vorgeschalteten und der Multiplexereinrichtung (4) nachgeschalteten Regeleinrichtung (10) zur Begrenzung des Sendestroms (I_{LF}).

5. Sendevorrichtung nach Anspruch 4, mit einer ausgangsseitig mit einem Steuereingang (Pᵢₙ) der Verstärkereinrichtung (2) verbundenen Steuereinrichtung (14), die einen ersten Eingang (E₁) für ein Taktsignal (LF_{clk}) und einen zweiten Eingang (E₂) für ein Steuersignal (S_{T}) aufweist.

6. Sendevorrichtung nach Anspruch 5, bei der die Steuereinrichtung (14) ein logisches Verknüpfungsglied (16) mit einem ersten Eingang für das Taktsignal (LF_{clk}) und mit einem zweiten Eingang umfasst, mit dem der Komparator (12) ausgangsseitig über ein Schaltwerk (18) verbundenen ist, wobei als Schaltwerk (18) ein gesteuertes latch-Flipflop zur Pulsweitenmodulation eines Steuereingangssignals (Pᵢₙ) der Verstärkereinrichtung (2) vorgesehen ist.

## Claims

1. Method for operating a transmission apparatus (1) of an entry system having a number of longwave antennas (LF_{1...n}), in which the longwave antennas (LF_{1...n}) are actuated together by means of a central power amplifier (2) and are activated individually via a multiplexer device (4),
**characterized in that** the transmitting current (I_{LF}) is regulated, wherein the actual value of the transmitting current (I_{LF}) is detected and, if a setpoint value (I_{Ref}) is exceeded, the transmitting current (I_{LF}) is approximated to the setpoint value (I_{Ref}) by means of pulse width modulation of the input signal (Pᵢₙ) for the amplifier device (2).

2. Method according to Claim 1, in which the power amplifier (2) is used to produce a square-wave or trapezoidal output voltage (LFₒᵤₜ) for actuating the longwave antennas (LF_{1...n}).

3. Transmission apparatus (1) for an entry system, particularly in a vehicle,
- having a number of longwave antennas (LF_{1...n}),
- having a multiplexer device (4) for activating a respective individual longwave antenna (LF_{1...n}), and
- having a shared amplifier device (2), the output (LFₒᵤₜ) of which has the longwave antennas (LF_{1...n}) connected to it together,
**characterized in that**
- a control unit (10) for regulating the transmitting current (I_{LF}) is provided,
wherein also an apparatus (8) for detecting the actual value of the transmitting current (I_{LF}) and a control unit (10, 12, 14) for pulse width modulation of the input signal (Pᵢₙ) for the amplifier device (2) are provided, and wherein the control unit approximates the transmitting current (I_{Lf}) to a setpoint value (I_{Ref}) if the setpoint value (I_{Ref}) is exceeded.

4. Transmission apparatus according to Claim 3, having a regulatory device (10) for limiting the transmitting current (I_{LF}), said regulatory device being connected upstream of the input side of the amplifier device (2) and being connected downstream of the multiplexer device (4).

5. Transmission apparatus according to Claim 4, having a control device (14) that has its output side connected to a control input (Pᵢₙ) of the amplifier device (2) and that has a first input (E₁) for a clock signal (LF_{clk}) and a second input (E₂) for a control signal (S_{T}).

6. Transmission apparatus according to Claim 5, in which the control device (14) comprises a combinational logic element (16) having a first input for the clock signal (LF_{clk}) and having a second input, to which the comparator (12) has its output side connected via a switch mechanism (18), wherein the switch mechanism (18) provided is a controlled latch flipflop for the pulse width modulation of a control input signal (Pᵢₙ) for the amplifier device (2).

## Revendications

1. Procédé d'actionnement d'un dispositif d'émission (1) d'un système d'accès comprenant un nombre d'antennes à ondes longues (LF_{1...n}), dans lequel les antennes à ondes longues (LF_{1...n}) sont commandées conjointement au moyen d'un amplificateur de puissance central (2) et activées individuellement par le biais d'un dispositif de multiplexage (4),
**caractérisé en ce que** le courant d'émission (I_{LF}) est régulé, la valeur effective du courant d'émission (I_{LF}) étant mesurée et que si une valeur théorique (I_{Réf}) est dépassée, le courant d'émission (I_{LF}) se rapproche de la valeur théorique (I_{Réf}) par le biais d'une modulation d'impulsions en durée du signal d'entrée (Pᵢₙ) du dispositif d'amplification (2).

2. Procédé selon la revendication 1, dans lequel une tension de sortie de forme rectangulaire ou trapézoïdale (LFₒᵤₜ) est générée au moyen de l'amplificateur de puissance (2) afin de commander les antennes à ondes longues (LF_{1...n}).

3. Dispositif d'émission (1) pour un système d'accès, en particulier d'un véhicule,
- comprenant un nombre d'antennes à ondes longues (LF_{1...n}),
- comprenant un dispositif de multiplexage (4) pour activer, respectivement, une antenne à ondes longues (LFₙ) individuelle, et
- comprenant un dispositif d'amplification commun (2) à la sortie duquel (LFₒᵤₜ) les antennes à ondes longues (LF_{1...n}) sont raccordées conjointement,
**caractérisé en ce que**
- une unité de commande (10) est prévue pour réguler le courant d'émission (I_{LF}),
un dispositif (8) étant, en outre, prévu pour mesurer la valeur effective du courant d'émission (I_{LF}) et une unité de commande (10, 12, 14) destinée à la modulation d'impulsions en durée du signal d'entrée (Pᵢₙ) du dispositif d'amplification (2), et l'unité de commande se rapprochant du courant d'émission (I_{LF}) de la valeur théorique (I_{Réf}) lors du dépassement de la valeur théorique (I_{Réf}).

4. Dispositif d'émission selon la revendication 3, comprenant un dispositif de régulation (10) monté en amont du dispositif d'amplification (2) du côté de l'entrée et en aval du dispositif de multiplexage (4) pour limiter le courant d'émission (I_{LF}).

5. Dispositif d'émission selon la revendication 4, comprenant un dispositif de commande (14) relié du côté de la sortie à une entrée de commande (Pᵢₙ) du dispositif d'amplification (2), qui présente une première entrée (E₁) pour un signal d'horloge (LF_{clk}) et une deuxième entrée (E₂) pour un signal de commande (S_{T}).

6. Dispositif d'émission selon la revendication 5, dans lequel le dispositif de commande (14) comprend une porte logique (16) dotée d'une première entrée pour le signal d'horloge (LF_{clk}) et d'une deuxième entrée à laquelle le comparateur (12) est relié du côté de la sortie par le biais d'un circuit séquentiel (18), une bascule à verrou commandée est prévue comme circuit séquentiel (18) aux fins de la modulation d'impulsions en durée d'un signal d'entrée de commande (Pᵢₙ) du dispositif d'amplification (2).
